# EUROPEAN PATENT APPLICATION

(11) **EP 4 814 342 A1**
(43) Date of publication of application: **30.09.2026**
(21) Application number: 25167180.6
(22) Date of filing: 28.03.2025
(51) Int. Cl.: F16H 57/021, F16H 57/023, F16C 35/063, F16C 35/067, F16H 57/022, F16H 57/02

(54) **GEARBOX ASSEMBLY**

(71) Applicant: Volvo Truck Corporation, 405 08 Göteborg (SE)
(72) Inventor: GREEN, Knut, 414 65 Göteborg (SE); TJERNSTRÖM, Oskar, 422 50 Gothenburg (SE); SKINNER, Sean, Martinsburg 25404 (US)
(74) Representative: Zacco Sweden AB

(57) **Abstract**

A gearbox assembly (10), comprising: a shaft (12) having a first end (14a) and a second end (14b) opposite the first end, the first end comprising a recess (16); a bearing (30) arranged in the recess, the bearing comprising an inner race (32a); and a clamping shaft (34) arranged at least partly in the recess and configured to limit axial movement of the inner race of the bearing in a direction (D) towards the second end of the shaft, the clamping shaft comprising a shaft portion (36) and a clamping portion (38), wherein the clamping portion is adapted to bear against an inside (42) of the inner race of the bearing, which inside faces said second end of the shaft.

## Description

### TECHNICAL FIELD

The disclosure relates generally to gearboxes. In particular aspects, the disclosure relates to a gearbox assembly comprising a shaft such as a countershaft. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle transmissions with a countershaft are common in many vehicles, including, but not limited to heavy-duty vehicles. A countershaft may for example be included in the main gearbox of the transmission, where the countershaft may be connected to an input shaft via gearwheels.

In another example, a countershaft may be included in a power take off (PTO) unit of the transmission. Here, the countershaft may function as an output shaft interconnected to a driven shaft of the PTO unit with a pair of gearwheels.

### SUMMARY

According to a first aspect of the disclosure, there is provided a gearbox assembly, comprising: a shaft (for example a countershaft) having a first end and a second end opposite the first end, the first end comprising a recess; a bearing arranged in the recess, the bearing comprising an inner race; and a clamping shaft arranged at least partly in the recess and configured to limit axial movement of the inner race of the bearing in a direction towards the second end of the shaft, the clamping shaft comprising a shaft portion and a clamping portion, wherein the clamping portion is adapted to bear against an inside of the inner race of the bearing, which inside faces said second end of the shaft. The first aspect of the disclosure may seek to achieve axial limiting of the bearing inner race without compromising on (compact) (counter)shaft size. A retainer ring would typically be used to limit the inner race of a bearing, but for a compact design of the (counter)shaft, this may not be feasible in assembly. A technical benefit may hence include that the present gearbox assembly can have a compact size, while still being able to limit axial movement of the inner race of the bearing in a direction towards the second end.

Optionally in some examples, including in at least one preferred example, the gearbox assembly may further comprise: a gearbox housing part adapted to be mounted over the recess of the shaft, the gearbox housing part having a hole and an external contact surface surrounding said hole; and a fastening member adapted to threadingly engage the shaft portion of the clamping shaft, the fastening member having a contact surface adapted to abut the external contact surface of the gearbox housing part, wherein tightening of the fastening member when threadingly engaged to the shaft portion forces the clamping portion against said inside of the inner race of the bearing. A technical benefit may include that the clamping shaft may be torqued from outside of the gearbox that the present gearbox assembly may be a part of.

Optionally in some examples, including in at least one preferred example, the fastening member may be accessible from the outside of the gearbox housing part.

Optionally in some examples, including in at least one preferred example, the fastening member may be a nut or a screw. A technical benefit may include that the clamping portion may be forced against said inside of the inner race of the bearing using a basic tool such as a wrench.

Optionally in some examples, including in at least one preferred example, at least one of said shaft portion and the gearbox housing part may comprise at least one chamfer adapted to radially align the clamping shaft relative to the hole in the gearbox housing part when mounting the gearbox housing part over the recess of the shaft. A technical benefit may include that a robust O-ring sealing interface may be provided to seal between the shaft portion and the hole without the conventional, strict requirements of initial alignment such an interface otherwise introduces.

Optionally in some examples, including in at least one preferred example, the gearbox assembly may further comprise an O-ring interface arranged to seal any gap between the shaft portion of the clamping shaft and an inner wall of the hole in the gearbox housing part. A technical benefit may include that a robust seal may be provided to prevent any oil leakage through the hole in the gearbox housing part.

Optionally in some examples, including in at least one preferred example, the O-ring interface may comprise an O-ring fitted with the shaft portion of the clamping shaft. A technical benefit may include that the O-ring may be fitted already in pre-assembly.

Optionally in some examples, including in at least one preferred example, the clamping shaft may comprise at least one clamping shaft rotation stop element and the gearbox housing part may comprise a gearbox housing part rotation stop element complementary to the at least one clamping shaft rotation stop element for rotationally aligning the clamping shaft relative to the gearbox housing part as the fastening member is tightened. A technical benefit may include that the clamping shaft may be prevented from spinning freely when the fastening member is being tightened.

Optionally in some examples, including in at least one preferred example, the gearbox housing part rotation stop element may comprise an internal polygonal structure in the hole in the gearbox housing part, and the at least one clamping shaft rotation stop element may comprise a corresponding external polygonal structure on the shaft portion of the clamping shaft, which external polygonal structure is at least partly receivable in the internal polygonal structure.

Optionally in some examples, including in at least one preferred example, the shaft and the bearing may be co-axially arranged, wherein the shaft portion of the clamping shaft comprises a threaded interface, at least one chamfer and an O-ring interface, and wherein the clamping portion of the clamping shaft is dish-shaped.

According to a second aspect of the disclosure, there is provided a vehicle comprising the gearbox assembly according to the first aspect pf the disclosure. The gearbox assembly may for example form part of a power take off unit of a transmission of the vehicle.

According to a third aspect of the disclosure, there is provided a method, comprising: providing a gearbox assembly, the gearbox assembly comprising: a shaft having a first end and a second end opposite the first end, the first end comprising a recess; a bearing arranged in the recess, the bearing comprising an inner race; and a clamping shaft arranged at least partly in the recess and configured to limit axial movement of the inner race of the bearing in a direction towards the second end of the shaft, the clamping shaft comprising a shaft portion and a clamping portion, wherein the clamping portion is adapted to bear against an inside of the inner race of the bearing, which inside faces said second end of the shaft; (wherein the method further comprises) mounting a gearbox housing part over the recess of the shaft, the gearbox housing part having a hole and an external contact surface surrounding said hole; and threadingly engaging the shaft portion of the clamping shaft by a fastening member such that a contact surface of the fastening member abuts the external contact surface of the gearbox housing part, wherein tightening of the fastening member forces the clamping portion against said inside of the inner race of the bearing. The third aspect of the disclosure may seek to achieve axial limiting of the bearing inner race without compromising on (compact) shaft size. A technical benefit may hence include that the gearbox assembly can have a compact size, while still being able to limit axial movement of the inner race of the bearing in a direction towards the second end. Another technical benefit may include that the clamping shaft may be torqued from outside of the gearbox that the present gearbox assembly may be a part of.

Optionally in some examples, including in at least one preferred example, the fastening member may be accessible from the outside of the gearbox housing part.

Optionally in some examples, including in at least one preferred example, the fastening member may be a nut or a screw. A technical benefit may include that the clamping portion may be forced against said inside of the inner race of the bearing using a basic tool such as a wrench.

Optionally in some examples, including in at least one preferred example, the clamping shaft may be radially self-aligned relative to the hole in the gearbox housing part by at least one chamfer on at least one of said shaft portion and the gearbox housing part when mounting the gearbox housing part over the recess of the shaft. A technical benefit may include that a robust O-ring sealing interface may be provided to seal between the shaft portion and the hole without the conventional, strict requirements of initial alignment such an interface otherwise introduces.

Optionally in some examples, including in at least one preferred example, a gap between the shaft portion of the clamping shaft and an inner wall of the hole in the gearbox housing part may be sealed by an O-ring interface once the fastening member has been tightened. A technical benefit may include that a robust seal may be provided to prevent any oil leakage through the hole in the gearbox housing part.

Optionally in some examples, including in at least one preferred example, the O-ring interface may comprise an O-ring fitted with the shaft portion of the clamping shaft in the provided gearbox assembly.

Optionally in some examples, including in at least one preferred example, the clamping shaft may be rotationally self-aligned relative to the gearbox housing part by at least one clamping shaft stop element of the clamping shaft and a complementary gearbox housing part rotation stop element of the gearbox housing part. A technical benefit may include that the clamping shaft may be prevented from spinning freely when the fastening member is being tightened.

Optionally in some examples, including in at least one preferred example, the gearbox housing part rotation stop element may comprise an internal polygonal structure in the hole in the gearbox housing part, and the at least one clamping shaft rotation stop element may comprise a corresponding external polygonal structure on the shaft portion of the clamping shaft, which external polygonal structure is at least partly received in the internal polygonal structure.

Optionally in some examples, including in at least one preferred example, the shaft, the bearing, and the clamping shaft are co-axially arranged when the fastening member has been tightened.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1a****-c** are cross-sectional side views of an exemplary gearbox assembly according to an example in pre-assembly, during assembly, and as assembled, respectively.
**FIGs. 2a****-b** are perspective views of a clamping shaft and a gearbox housing part, respectively, of the gearbox assembly in **FIGs. 1a****-c**
**FIGs. 3a****-c** are cross-sectional side views of an exemplary gearbox assembly according to another example in pre-assembly, during assembly, and as assembled, respectively.

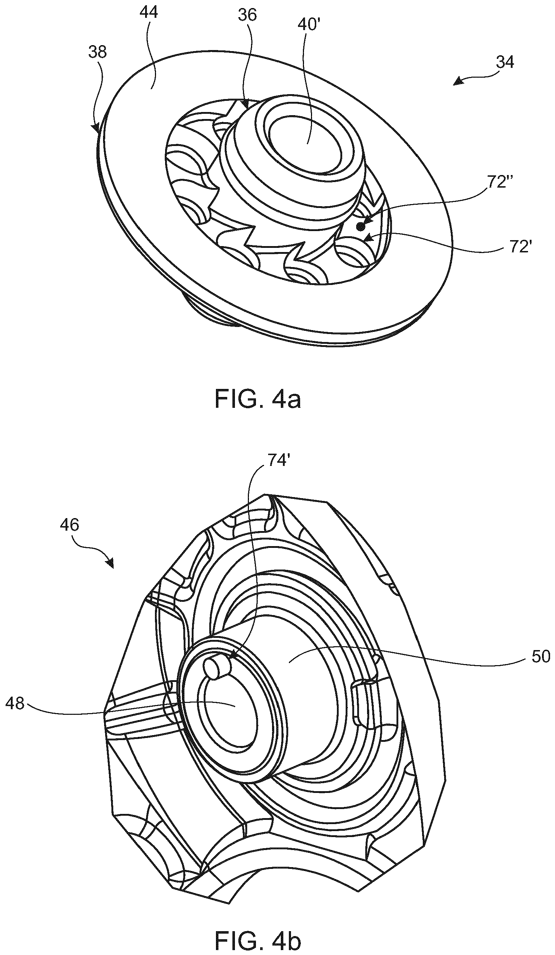

**FIGs. 4a****-b** are perspective views of a clamping shaft and a gearbox housing part, respectively, of the gearbox assembly in **FIGs. 4a****-c.**
**FIG. 5** is a flow chart of an exemplary gearbox assembly method according to an example.
**FIG. 6** is another view of **FIG. 1a**, according to an example.

### DETAILED DESCRIPTION

The detailed description set forth below provides information and examples of the disclosed technology with sufficient detail to enable those skilled in the art to practice the disclosure.

It may be desired to achieve axial limiting of a shaft's bearing inner race, without compromising on (compact) shaft size. A retainer ring would typically be used to limit the inner race of a bearing, but for a compact design of the shaft, this may not be feasible in assembly. To this end, the disclosure provides a gearbox assembly, comprising: a shaft having a first end and a second end opposite the first end, the first end comprising a recess; a bearing arranged in the recess, the bearing comprising an inner race; and a clamping shaft arranged at least partly in the recess and configured to limit axial movement of the inner race of the bearing in a direction towards the second end of the shaft, the clamping shaft comprising a shaft portion and a clamping portion, wherein the clamping portion is adapted to bear against an inside of the inner race of the bearing, which inside faces said second end of the shaft. A technical benefit of the clamping shaft may include that the gearbox assembly can have a compact size, while still being able to limit axial movement of the inner race of the bearing in a direction towards the second end.

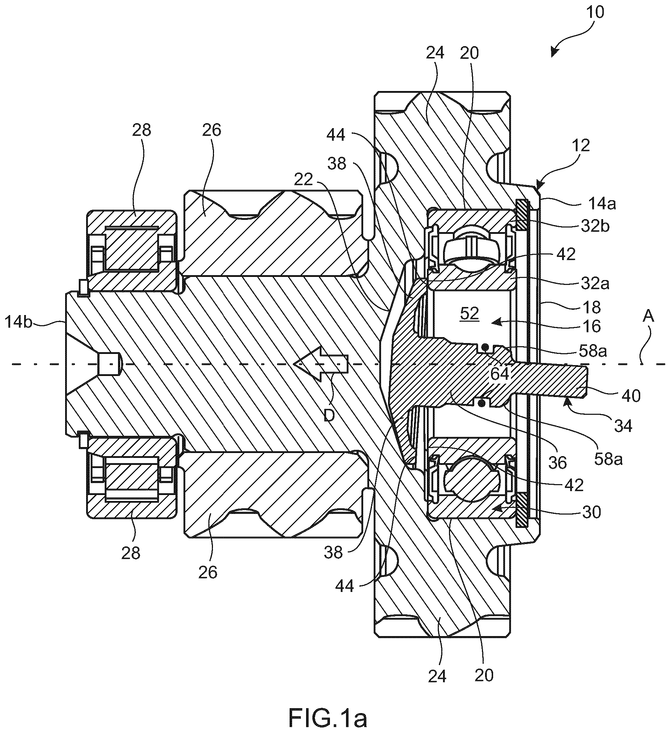

**FIGs. 1a****-c** illustrate an exemplary gearbox assembly 10 according to an example. The gearbox assembly 10 may for example form part of a power take off (PTO) unit of a transmission of a heavy-duty vehicle 100, such as a truck or construction equipment. However, other applications or implementations are possible as well.

The gearbox assembly 10 comprises a shaft, such as a countershaft 12. The countershaft 12 has a first end 14a and a second end 14b opposite the first end 14a. Longitudinal axis A extends between the first and second ends 14a-b. The first end 14a of the countershaft 12 comprises a recess 16. The recess 16 may have an opening 18, a cylindrical side wall 20, and a bottom 22. The bottom 22 may be opposite the opening 18.

The countershaft 12 may also comprise an integrated gear 24 at the first end 14a. In case the gearbox assembly 10 form part of a PTO unit, the countershaft 22 may be an output shaft, and the gear 24 may be configured to mate with an external implement (not shown) to be powered. The countershaft 12 may further comprise a pinon 26 arranged between the first and second ends 14a-b. The pinion 26 may be arranged to interconnect the countershaft 12 to a driven shaft of the PTO unit. At the second end 14b of the countershaft 12, a cylindrical roller bearing 28 may be provided.

The gearbox assembly 10 further comprises a bearing 30 arranged in the recess 16 at the first end 14a of the countershaft 12. The bearing 30 comprises an inner race 32a. The bearing 30 may also comprise an outer race 32b. The outer race 32b may be arranged against the side wall 20 of the recess 16. The bearing 30 may for example be a deep groove ball bearing.

The gearbox assembly 10 further comprises a clamping shaft (or retainer) 34. The clamping shaft 34 is arranged at least partly in the recess 16. The clamping shaft 34 is generally configured to limit axial movement of the inner race 32a of the bearing 30 in a direction D towards the second end 14b of the countershaft 12. To this end, the clamping shaft 34 comprises a shaft portion 36 and a clamping portion 38. The shaft portion 36 may comprise a threaded interface 40. And the clamping portion 38 is adapted to bear against the inside (or inner side) 42 of the inner race 32a of the bearing 30, which inside 42 faces the second end 14b of the countershaft 12.

The threaded interface 40 of the shaft portion 36 may for example comprise an external thread. The threaded interface 40 may be facing in the opposite direction compared to direction D. The threaded interface 40 may be provided at an end of the shaft portion 36 opposite the end where the clamping portion 38 is located, as in **FIG. 1a**.

The clamping portion 38 of the clamping shaft 34 may extend radially from the shaft portion 36. The clamping portion 38 may for example be dish-shaped. Moreover, the clamping portion 38 may comprise a circular and/or peripheral contact surface 44 adapted to bear against the inside 42 of the inner race 32a. The clamping portion 38 may (axially) be positioned between the bottom 22 of the recess 16 and the inner race 32a of the bearing 30.

The gearbox assembly 10 as depicted in **FIG. 1a** may be in pre-assembly. Notably, the clamping shaft 34 may here retain some degree of movement freedom. For example, the clamping shaft 34 needs not be co-axial with the countershaft 12 and the bearing 30 in pre-assembly. Likewise, there could be an initial gap between the contact surface 44 of clamping portion 38 of the clamping shaft 34 and the inside 42 of the inner race 32a of the bearing 30.

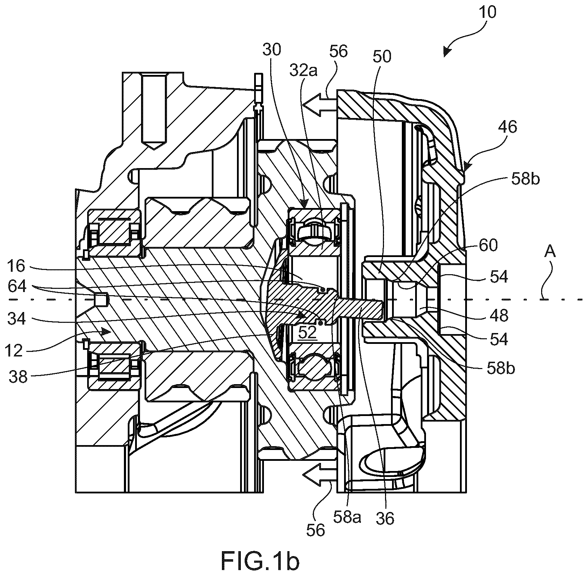

As illustrated in **FIGs. 1b****-c**, which depict the gearbox assembly 10 during assembly and as assembled, respectively, the gearbox assembly 10 may further comprise a gearbox housing part 46. The gearbox housing part 46 is adapted to be fixedly mounted over (or in front of) the opening 18 of the recess 16 of the countershaft 12. The gearbox housing part 46 comprises a through hole 48. The through hole 48 may be co-axial with the countershaft 12 and the bearing 30, when the gearbox housing part 46 is mounted. Moreover, the through hole 48 may be extended by an internal cylindrical portion (or spindle) 50 of the gearbox housing part 46. The internal cylindrical portion 50 may be positioned in the space 52 defined by the inner race 32a of the bearing 30, when the gearbox housing part 46 is mounted. The gearbox housing part 46 may further comprise an external contact surface 54 surrounding the through hole 48.

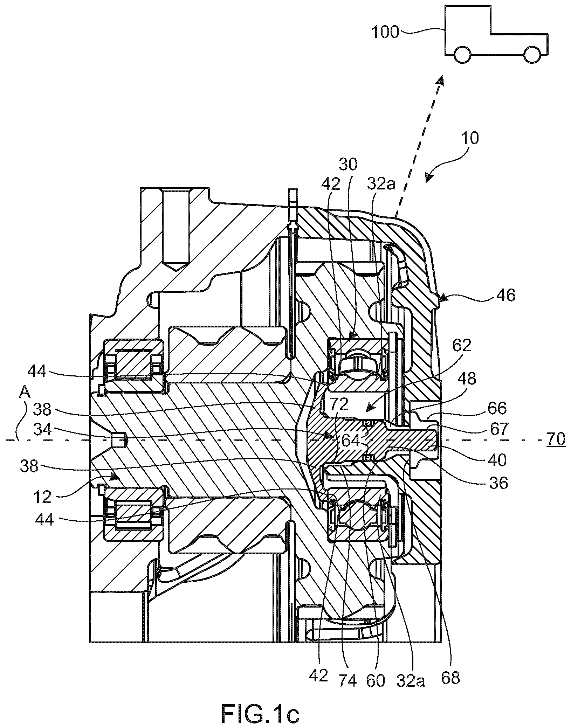

During assembly, when mounting the gearbox housing part 46 over the recess 16 of the countershaft 12 (the gearbox housing part 46 may for example be moved to the left as indicated by arrows 56 in **FIG. 1b**), chamfers 58a-b on the shaft portion 36 and the gearbox housing part 46, respectively, contact each other and radially align the initially misaligned clamping shaft 34 relative to the through hole 48 in the gearbox housing part 46, so that the clamping shaft 34 becomes co-axial with the countershaft 12 and the bearing 30 (see **FIG. 1c**). The chamfer 58a on the shaft portion 36 of the clamping shaft 34 may for example be located between the clamping portion 38 and the threaded interface 40. The chamfer 58b of the gearbox housing part 46 may for example be located on an inner wall 60 of the through hole 48 at the internal cylindrical portion 50.

Any gap between the shaft portion 36 of the clamping shaft 34 and the inner wall 60 of the through hole 48 in the gearbox housing part 46 of the gearbox assembly 10 as assembled may be sealed by an O-ring interface 62. Specifically, the O-ring interface 62 may comprise an O-ring 64 fitted with the shaft portion 36 of the clamping shaft 34. The O-ring 64 may be fitted already in pre-assembly, see **FIG. 1a**.

The gearbox assembly 10 may further comprise a fastening member 66. The fastening member 66 is adapted to threadingly engage the threaded interface 40 of the shaft portion 36 of the clamping shaft 34, which threaded interface 40 may extend out of the through hole 48 when the gearbox housing part 46 is mounted, as seen in **FIG. 1c****.** The fastening member 66 may have a contact surface 68 adapted to abut (directly or via at least one washer or the like) the external contact surface 54 of the gearbox housing part 46. Tightening of the fastening member 66, while contact surface 68 abuts external contact surface 54, forces the clamping portion 38 of the clamping shaft 34 against the inside 42 of the inner race 32a of the bearing 30, whereby the clamping shaft 34 may limit (or prevent) axial movement of the inner race 32a of the bearing 30 in the direction D, as the contact surface 44 of the clamping portion 38 bears against the inside 42 of the inner race 32a. The fastening member 66 may be accessible and tightened e.g. by a wrench from the outside 70 of the gearbox housing part 46. In the exemplary gearbox assembly 10 of **FIG. 1c****,** the fastening member is a nut 66. The nut 66 may have an internal thread 67.

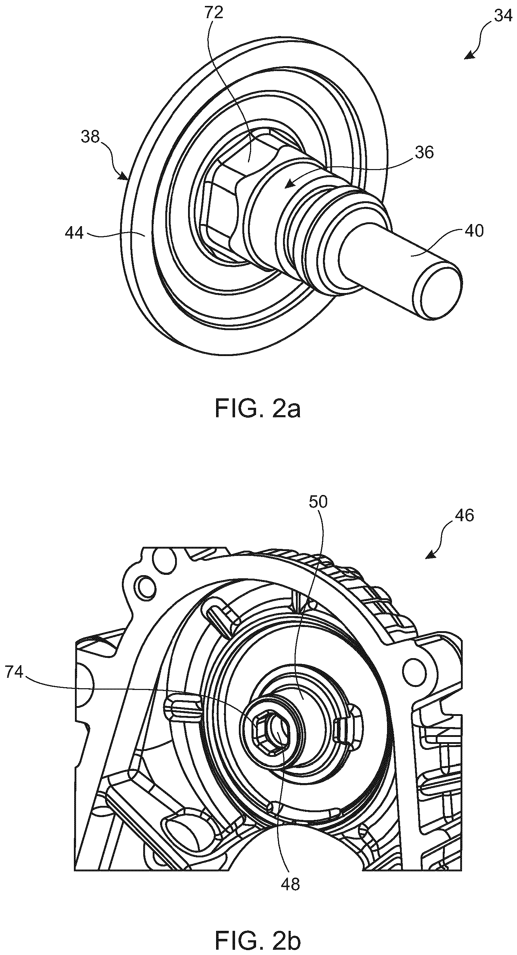

With further reference to **FIGs. 2a****-c,** to prevent the clamping shaft 34 from spinning freely when the fastening member 66 is being tightened, the clamping shaft 34 and the gearbox housing part 46 may comprise complementary shaft rotation stop elements 72 and 74. The rotation stop elements 72 and 74 may serve to rotationally align the clamping shaft 34 relative to the gearbox housing part 46 as the fastening member 66 is tightened. Rotation stop element 74 may comprise an internal (or female) polygonal structure in the through hole 48 in the gearbox housing part 46, whereas rotation stop element 72 may comprise a corresponding external (or male) polygonal structure on the shaft portion 36 of the clamping shaft 34, which external polygonal structure is at least partly received in the internal polygonal structure when the gearbox housing part 46 is mounted (see **FIG. 1c**). The internal polygonal structure may for example be positioned at the opposite end of the through hole 48 compared to the external contact surface 54. The external polygonal structure of the shaft portion 36 may for example be positioned next to the clamping portion 38 of the clamping shaft 34. The polygonal structures of stop elements 72 and 74 may for example be hexagonal structures.

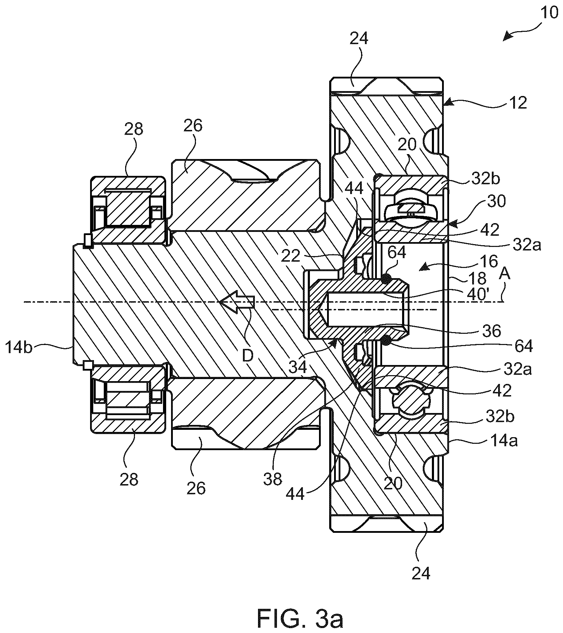

**FIG. 3a****-c** illustrate an exemplary gearbox assembly 10 according to another example. The gearbox assembly 10 here may be similar to that of **FIGs. 1a****-c,** with some exceptions.

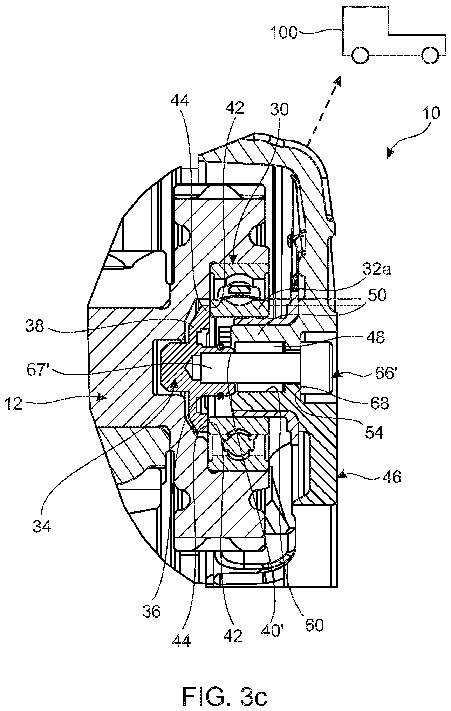

One difference is that threaded interface 40' of the shaft portion 36 of the clamping shaft 34 here comprises an internal thread, whereas fastening element 66' is a screw that comprises an external thread 67' and a contact surface 68' under its head. The screw 66' is inserted into the through hole 48 to engage the threaded interface 40' when the gearbox assembly 10 is assembled (as seen in **FIG. 3c**)**.**

Another difference is the rotation stop elements. The at least one rotation stop element of the clamping shaft 34 may here comprises a circular array of rotation stop holes 72' optionally with associated rotation stop slopes 72'' in the clamping portion 38, whereas rotation stop member of the gearbox housing may comprises a rotation stop pin 74' positioned on the internal cylindrical portion 50 next to the through hole 48 and receivable in any one of said rotation stop holes 72'.

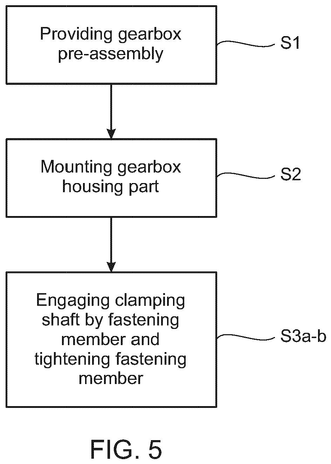

**FIG. 5** is a flow chart of an exemplary gearbox assembly method.

The method comprises providing S1 a gearbox assembly 10, such as the gearbox assembly 10 as depicted in **FIG. 1a** or **FIG. 3a** (i.e. "pre-assembly"). Accordingly, the gearbox assembly 10 may comprise: countershaft 12 having first end 14a and second end 14b opposite the first end 14a, the first end 14a comprising recess 16; bearing 30 arranged in the recess 16, the bearing 30 comprising inner race 32a; and clamping shaft 34 arranged at least partly in the recess 16 and configured to limit axial movement of the inner race 32a of the bearing 30 in direction D towards the second end 14b of the countershaft 12, the clamping shaft 34 comprising shaft portion 36 and clamping portion 38, wherein the shaft portion 36 may comprise threaded interface 40, 40', and wherein the clamping portion 38 is adapted to bear against inside 42 of the inner race 32a of the bearing 30, which inside 42 faces the second end 14b of the countershaft 12.

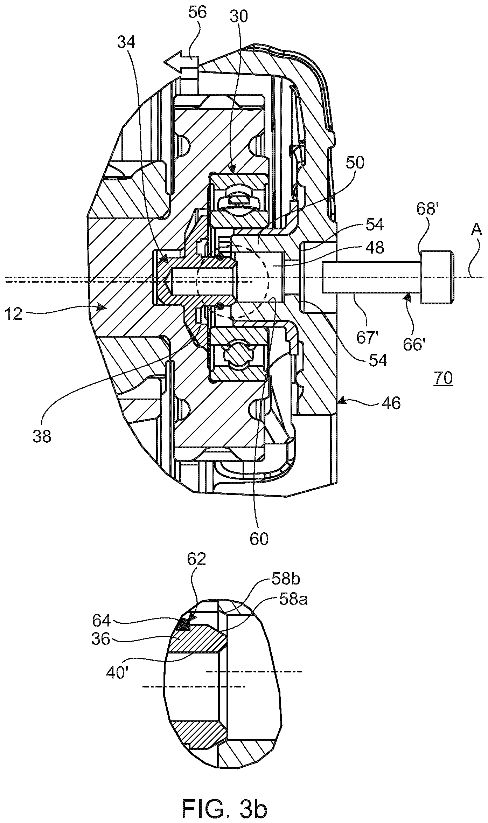

The method further comprises mounting S2 gearbox housing part 46 over the recess 16 of the countershaft 12 (see **FIG. 1b** or **FIG. 3b****;** "during assembly"), the gearbox housing part 46 having (through) hole 48 and external contact surface 54 surrounding the through hole 48. The clamping shaft 36 may be radially self-aligned relative to the through hole 48 by chamfers 58a-b on the shaft portion 38 and the gearbox housing part 48 when mounting S2 the gearbox housing part 46.

The method further comprises threadingly engaging S3a (the threaded interface 40, 40' of) the shaft portion 36 of the clamping shaft 34 by fastening member 66, 66' such that contact surface 68, 68' of the fastening member 66, 66' abuts the external contact surface 54 of the gearbox housing part 48, wherein tightening S3b of the fastening member 66, 66' forces the clamping portion 38 against inside 42 of the inner race 32a of the bearing 30 (see **FIG. 1c** **or** **FIG. 3c****;** "assembled"). The clamping shaft 36 may here be rotationally self-aligned relative to the gearbox housing part 46 by at least one stop element 72, 72' of the clamping shaft 36 and complementary stop element 74, 74' of the gearbox housing part 46. Moreover, any gap between the shaft portion 36 of the clamping shaft 34 and the inner wall 60 of the through hole 48 in the gearbox housing part 46 may be sealed by O-ring interface 62/O-ring 64.

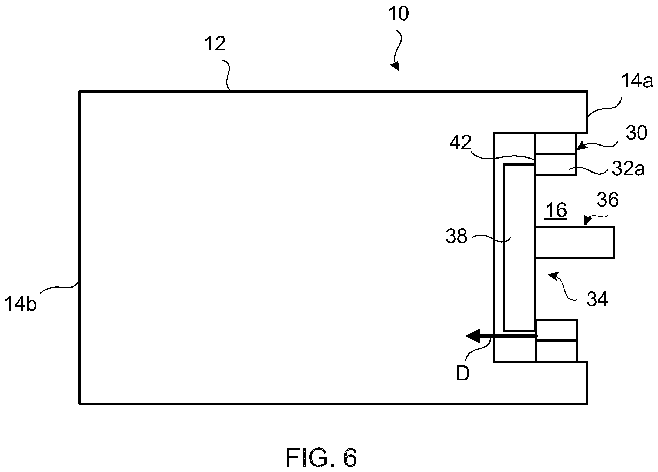

**FIG. 6** is another view of **FIG. 1a**, according to an example. **FIG. 6** schematically illustrates gearbox assembly 10, comprising: shaft 12 having first end 14a and second end 14b opposite the first end 14a, the first end 14a comprising recess 16; bearing 30 arranged in the recess 16, the bearing 30 comprising inner race 32a; and clamping shaft 34 arranged at least partly in the recess 16 and configured to limit axial movement of the inner race 32a of the bearing 30 in direction D towards the second end 14b of the shaft 16, the clamping shaft 34 comprising shaft portion 36 and clamping portion 38, wherein the clamping portion 38 is adapted to bear against inside 42 of the inner race 32a of the bearing 30, which inside 42 faces second end 14b of the shaft 16.

Example 1: A gearbox assembly, comprising: a shaft having a first end and a second end opposite the first end, the first end comprising a recess; a bearing arranged in the recess, the bearing comprising an inner race; and a clamping shaft arranged at least partly in the recess and configured to limit axial movement of the inner race of the bearing in a direction towards the second end of the shaft, the clamping shaft comprising a shaft portion and a clamping portion, wherein the clamping portion is adapted to bear against an inside of the inner race of the bearing, which inside faces said second end of the shaft.

Example 2: The gearbox assembly of example 1, further comprising: a gearbox housing part adapted to be mounted over the recess of the shaft, the gearbox housing part having a hole and an external contact surface surrounding said hole; and a fastening member adapted to threadingly engage the shaft portion of the clamping shaft, the fastening member having a contact surface adapted to abut the external contact surface of the gearbox housing part, wherein tightening of the fastening member when threadingly engaged to the shaft portion forces the clamping portion against said inside of the inner race of the bearing.

Example 3: The gearbox assembly of example 2, wherein the fastening member is accessible from the outside of the gearbox housing part.

Example 4: The gearbox assembly of any of examples 2-3, wherein the fastening member is a nut or a screw.

Example 5: The gearbox assembly of any of examples 2-4, wherein at least one of said shaft portion and the gearbox housing part comprises at least one chamfer adapted to radially align the clamping shaft relative to the hole in the gearbox housing part when mounting the gearbox housing part over the recess.

Example 6: The gearbox assembly of any of examples 2-5, further comprising an O-ring interface arranged to seal any gap between the shaft portion of the clamping shaft and an inner wall of the hole in the gearbox housing part.

Example 7: The gearbox assembly of example 6, wherein the O-ring interface comprises an O-ring fitted with the shaft portion of the clamping shaft.

Example 8: The gearbox assembly of any of examples 2-7, wherein the clamping shaft comprises at least one clamping shaft rotation stop element and the gearbox housing part comprises a gearbox housing part rotation stop element complementary to the at least one clamping shaft rotation stop element for rotationally aligning the clamping shaft relative to the gearbox housing part as the fastening member is tightened.

Example 9: The gearbox assembly of example 8, wherein the gearbox housing part rotation stop element comprises an internal polygonal structure in the hole in the gearbox housing part, and wherein the at least one clamping shaft rotation stop element comprises a corresponding external polygonal structure on the shaft portion of the clamping shaft, which external polygonal structure is at least partly receivable in the internal polygonal structure.

Example 10: The gearbox assembly of example 1, wherein the shaft and the bearing are co-axially arranged, wherein the shaft portion of the clamping shaft comprises a threaded interface, at least one chamfer and an O-ring interface, and wherein the clamping portion of the clamping shaft is dish-shaped.

Example 11: A vehicle comprising the gearbox assembly according to any of examples 1-10.

Example 12: A method, comprising: providing a gearbox assembly, the gearbox assembly comprising: a shaft having a first end and a second end opposite the first end, the first end comprising a recess; a bearing arranged in the recess, the bearing comprising an inner race; and a clamping shaft arranged at least partly in the recess and configured to limit axial movement of the inner race of the bearing in a direction towards the second end of the shaft, the clamping shaft comprising a shaft portion and a clamping portion, wherein the clamping portion is adapted to bear against an inside of the inner race of the bearing, which inside faces said second end of the shaft; mounting a gearbox housing part over the recess of the shaft, the gearbox housing part having a hole and an external contact surface surrounding said hole; and threadingly engaging the shaft portion of the clamping shaft by a fastening member such that a contact surface of the fastening member abuts the external contact surface of the gearbox housing part, wherein tightening of the fastening member forces the clamping portion against said inside of the inner race of the bearing.

Example 13: The method of example 12, wherein the fastening member is accessible from the outside of the gearbox housing part.

Example 14: The method of any of examples 12-13, wherein the fastening member is a nut or a screw.

Example 15: The method of any of examples 12-14, wherein the clamping shaft is radially self-aligned relative to the hole in the gearbox housing part by at least one chamfer on at least one of said shaft portion and the gearbox housing part when mounting the gearbox housing part over the recess of the shaft.

Example 16: The method of any of examples 12-15, wherein a gap between the shaft portion of the clamping shaft and an inner wall of the hole in the gearbox housing part is sealed by an O-ring interface once the fastening member has been tightened.

Example 17: The method of example 16, wherein the O-ring interface comprises an O-ring fitted with the shaft portion of the clamping shaft in the provided gearbox assembly.

Example 18: The method of any of examples 12-17, wherein the clamping shaft is rotationally self-aligned relative to the gearbox housing part by at least one clamping shaft rotation stop element of the clamping shaft and a complementary gearbox housing part rotation stop element of the gearbox housing part.

Example 19: The method of example 18, wherein the gearbox housing part rotation stop element comprises an internal polygonal structure in the hole in the gearbox housing part, and wherein the at least one clamping shaft rotation stop element comprises a corresponding external polygonal structure on the shaft portion of the clamping shaft, which external polygonal structure is at least partly received in the internal polygonal structure.

Example 20: The method of any of examples 12-19, wherein the shaft, the bearing, and the clamping shaft are co-axially arranged when the fastening member has been tightened.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A gearbox assembly (10), comprising:
a shaft (12) having a first end (14a) and a second end (14b) opposite the first end, the first end comprising a recess (16);
a bearing (30) arranged in the recess, the bearing comprising an inner race (32a); and
a clamping shaft (34) arranged at least partly in the recess and configured to limit axial movement of the inner race of the bearing in a direction (D) towards the second end of the shaft (12), the clamping shaft comprising a shaft portion (36) and a clamping portion (38), wherein the clamping portion is adapted to bear against an inside (42) of the inner race of the bearing, which inside faces said second end of the shaft (12).

2. The gearbox assembly of claim 1, further comprising:
a gearbox housing part (46) adapted to be mounted over the recess of the shaft, the gearbox housing part having a hole (48) and an external contact surface (54) surrounding said hole; and
a fastening member (66, 66') adapted to threadingly engage the shaft portion of the clamping shaft, the fastening member having a contact surface (68, 68') adapted to abut the external contact surface of the gearbox housing part, wherein tightening of the fastening member when threadingly engaged to the shaft portion forces the clamping portion against said inside of the inner race of the bearing.

3. The gearbox assembly of claim 2, wherein the fastening member is accessible from the outside (70) of the gearbox housing part.

4. The gearbox assembly of any of claims 2-3, wherein the fastening member is a nut (66) or a screw (66').

5. The gearbox assembly of any of claims 2-4, wherein at least one of said shaft portion and the gearbox housing part comprises at least one chamfer (58a-b) adapted to radially align the clamping shaft relative to the hole in the gearbox housing part when mounting the gearbox housing part over the recess.

6. The gearbox assembly of any of claims 2-5, further comprising an O-ring interface (62) arranged to seal any gap between the shaft portion of the clamping shaft and an inner wall (60) of the hole in the gearbox housing part.

7. The gearbox assembly of claim 6, wherein the O-ring interface comprises an O-ring (64) fitted with the shaft portion of the clamping shaft.

8. The gearbox assembly of any of claims 2-7, wherein the clamping shaft comprises at least one clamping shaft rotation stop element (72, 72') and the gearbox housing part comprises a gearbox housing part rotation stop element (74, 74') complementary to the at least one clamping shaft rotation stop element for rotationally aligning the clamping shaft relative to the gearbox housing part as the fastening member is tightened.

9. The gearbox assembly of claim 8, wherein the gearbox housing part rotation stop element comprises an internal polygonal structure (74) in the hole in the gearbox housing part, and wherein the at least one clamping shaft rotation stop element comprises a corresponding external polygonal structure (72) on the shaft portion of the clamping shaft, which external polygonal structure is at least partly receivable in the internal polygonal structure.

10. The gearbox assembly of claim 1, wherein the shaft and the bearing are co-axially arranged, wherein the shaft portion of the clamping shaft comprises a threaded interface (40, 40'), at least one chamfer (58a) and an O-ring interface (62), and wherein the clamping portion of the clamping shaft is dish-shaped.

11. A vehicle (100) comprising the gearbox assembly (10) according to any of claims 1-10.

12. A method, comprising:
providing (S1) a gearbox assembly (10), the gearbox assembly comprising:
o a shaft (12) having a first end (14a) and a second end (14b) opposite the first end, the first end comprising a recess (16);
o a bearing (30) arranged in the recess, the bearing comprising an inner race (32a); and
o a clamping shaft (34) arranged at least partly in the recess and configured to limit axial movement of the inner race of the bearing in a direction (D) towards the second end of the shaft (12), the clamping shaft comprising a shaft portion (36) and a clamping portion (38), wherein the clamping portion is adapted to bear against an inside (42) of the inner race of the bearing, which inside faces said second end of the shaft (12);
mounting (S2) a gearbox housing part (46) over the recess of the shaft (12), the gearbox housing part having a hole (48) and an external contact surface (54) surrounding said hole; and
threadingly engaging (S3a) the shaft portion of the clamping shaft by a fastening member (66, 66') such that a contact surface (68, 68') of the fastening member abuts the external contact surface of the gearbox housing part, wherein tightening (S3b) of the fastening member forces the clamping portion against said inside of the inner race of the bearing.

13. The method claim 12, wherein the clamping shaft is radially self-aligned relative to the hole in the gearbox housing part by at least one chamfer (58a-b) on at least one of said shaft portion and the gearbox housing part when mounting the gearbox housing part over the recess of the shaft.

14. The method of any of claims 12-13, wherein a gap between the shaft portion of the clamping shaft and an inner wall (60) of the hole in the gearbox housing part is sealed by an O-ring interface (62) once the fastening member has been tightened.

15. The method of any of claims 12-14, wherein the clamping shaft is rotationally self-aligned relative to the gearbox housing part by at least one clamping shaft rotation stop element (72, 72') of the clamping shaft and a complementary gearbox housing part rotation stop element (74, 74') of the gearbox housing part.
